# NEUE EUROPÄISCHE PATENTSCHRIFT

(11) **EP 3 356 457 B2**
(45) Veröffentlichungstag und Bekanntmachung des Hinweises auf die Entscheidung über den Einspruch: **21.12.2022**
(45) Hinweis auf die Patenterteilung: 29.05.2019
(21) Anmeldenummer: 16775669.1
(22) Anmeldetag: 29.09.2016
(51) Int. Cl.: C08K 5/00, C08K 5/11, C08K 5/12

(54) **WEICHMACHER-ZUSAMMENSETZUNG, DIE POLYMERE DICARBONSÄUREESTER UND 1,2-CYCLOHEXANDICARBONSÄUREESTER ENTHÄLT**
PLASTICIZER COMPOSITION CONTAINING POLYMERIC DICARBOXYLIC ACID ESTERS AND 1,2-CYCLOHEXANE DICARBOXYLIC ACID ESTERS
COMPOSITION DE PLASTIFIANT CONTENANT DES ESTERS D'ACIDE DICARBOXYLIQUE POLYMÈRES ET DES ESTERS D'ACIDE 1,2-CYCLOHEXANEDICARBOXYLIQUE

(30) Priorität: 30.09.2015 EP 15187697
(43) Veröffentlichungstag der Anmeldung: 08.08.2018
(73) Patentinhaber: BASF SE, 67056 Ludwigshafen (DE)
(72) Erfinder: PFEIFFER, Matthias, 67459 Böhl-Iggelheim (DE); BREITSCHEIDEL, Boris, 67165 Waldsee (DE); GRIMM, Axel, 67480 Edenkoben (DE); MORGENSTERN, Herbert, 67158 Ellerstadt (DE)
(74) Vertreter: BASF IP Association
(86) Internationale Anmeldenummer: PCT/EP2016/073232
(87) Internationale Veröffentlichungsnummer: WO 2017/055429

(56) Entgegenhaltungen:
- EP-B1- 3 250 635
- WO-A1-03/029339
- WO-A1-2016/026835
- WO-A2-2007/144831
- CN-A- 103 804 732
- JP-A- 2003 277 561
- JP-A- 2003 277 561
- JP-A- 2014 034 169
- US-A- 2 838 428
- DATABASE CA [Online] CHEMICAL ABSTRACTS SERVICE, COLUMBUS, OHIO, US; SUN, HONGLIANG ET AL: "Rubber material for covering printing roller for both of UV ink and common ink", XP002764356, gefunden im STN Database accession no. 2014:833924
- DATABASE CA [Online] CHEMICAL ABSTRACTS SERVICE, COLUMBUS, OHIO, US; SUZUKI, OSAMU ET AL: "Chlorine containing paste resin compositions with low viscosity and good compatibility and molded articles", XP002764357, gefunden im STN Database accession no. 2003:767912
- DATABASE REGISTRY [Online] CHEMICAL ABSTRACTS SERVICE, COLUMBUS, OHIO, US; 16. November 1984 (1984-11-16), XP002764260, Database accession no. 24936-97-8
- DATABASE REGISTRY [Online] CHEMICAL ABSTRACTS SERVICE, COLUMBUS, OHIO, US; 16. November 1984 (1984-11-16), XP002764358, Database accession no. 2708-37-3
- Brochure Hexamoll® DINCH der BASF AG, 2017/2
- Safety Data Sheet Palamoll® 652
- Technical Information Palamoll® 654
- Technical Information Palamoll® 656
- Industrial Chemicals Notification, Palamoll® 654 & 656, Improvements of long term stability of plasticized PVC, Presentation at AMI Conference "PVC-Formulation 2018" in Köln, 11 04.2018
- Amtsblatt der Europäischen Union vom 15.1.2011, VERORDNUNG (EU) Nr. 10/2011 DER KOMMISSION vom 14. Januar2011 über Materialien und Gegenstande aus Kunststoff,die dazu bestimmt sind, mit Lebensmitteln in Berührung zu kommen
- Technical Information Palamoll® 646

## Beschreibung

### HINTERGRUND DER ERFINDUNG

Die vorliegende Erfindung betrifft eine Weichmacher-Zusammensetzung, die wenigstens einen polymeren Dicarbonsäureester und wenigstens einen 1,2-Cyclohexandicarbonsäureester enthält, Formmassen, die ein thermoplastisches Polymer oder ein Elastomer und eine solche Weichmacher-Zusammensetzung enthalten, und die Verwendung dieser Weichmacher-Zusammensetzungen und Formmassen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 °C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Weitere wichtige thermoplastische Polymere in denen üblicherweise Weichmacher Anwendung finden sind z. B. Polyvinylbutyral (PVB), Homo- und Copolymere von Styrol, Polyacrylate, Polysulfide oder thermoplastische Polyurethane (PU).

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP).

Es besteht der Bedarf, zumindest einige der eingangs erwähnten Phthalat-Weichmacher zu ersetzen, da diese im Verdacht stehen, gesundheitsschädlich zu sein. Dies gilt speziell für sensible Anwendungsbereiche wie Kinderspielzeug, Lebensmittelverpackungen oder medizinische Artikel.

Im Stand der Technik sind verschiedene alternative Weichmacher mit unterschiedlichen Eigenschaften für diverse Kunststoffe und speziell für PVC bekannt.

Eine aus dem Stand der Technik bekannte Weichmacherklasse, die als Alternative zu Phthalaten eingesetzt werden kann, basiert auf Cyclohexanpolycarbonsäuren, wie sie in der WO 99/32427 beschrieben sind. Im Gegensatz zu ihren unhydrierten aromatischen Analoga sind diese Verbindungen toxikologisch unbedenklich und können auch in sensiblen Anwendungsbereichen eingesetzt werden.

Die WO 00/78704 beschreibt ausgewählte Dialkylcyclohexan-1,3- und 1,4-dicarbonsäureester für die Verwendung als Weichmacher in synthetischen Materialien.

Eine weitere aus dem Stand der Technik bekannte Weichmacherklasse, die als Alternative zu Phthalaten eingesetzt werden kann, sind Terephthalsäureester, wie sie beispielsweise in der WO 2009/095126 beschrieben sind.

Ferner finden auch Ester der Adipinsäure als Weichmacher Verwendung, insbesondere auch für Polyvinylchlorid. Wichtigste Vertreter sind Adipinsäureester mit C₈-, C₉- und C₁₀-Alkoholen, z. B. Di-(2-ethylhexyl)-adipat, Diisononyladipate und Diisodecyladipate, die vor allem in Folien, Profilen, Kunstleder, Kabeln und Leitungen auf Weich-PVC-Basis verwendet werden, wenn die Produkte bei tiefen Temperaturen eingesetzt werden sollen. In DE 2009505 werden beispielsweise Bis-Isononylester der Adipinsäure beschrieben, die erhalten werden durch Veresterung von Adipinsäuren mit Isononanolen, die aus 2-Ethylhexen nach der Oxosynthese durch Umsetzen mit Kohlenmonoxid und Wasserstoff und gegebenenfalls nachfolgender Hydrierung hergestellt wurden. Die beschriebenen Bis-Isononyladipinsäureester sollen als Weichmacher für Polyvinylchlorid geeignet sein und sich durch geringe Flüchtigkeit, niedrige Viskosität und gute Kältefestigkeit der damit weichgemachten Polyvinylchloridmassen auszeichnen. In US 4623748 werden Dialkyladipate beschrieben, die durch Umsetzung von Propylen- oder Butylen-Oligomeren aus dem Dimersol-Prozeß in Gegenwart von geträgerten Tantal(V)halogeniden/oxiden als Katalysatoren, Reaktion der erhaltenen C₈-, Cg- bzw. C₁₂-Olefine zu C₉-, C₁₀- bzw. C₁₃-Alkoholen und Veresterung dieser Alkohole mit Adipinsäure hergestellt werden. Diese Dialkyladipate sollen sich durch hohe Flammpunkte auszeichnen und für den Einsatz als Schmierstoffe geeignet sein. Die EP 1171413 beschreibt Gemische von Diestern der Adipinsäure mit isomeren Nonanolen, die als Weichmacher für Polyvinylchlorid geeignet sein und sich insbesondere durch sehr gute kälteelastische Eigenschaften der damit weichgemachten Polyvinylchloridmassen auszeichnen sollen.

Neben monomeren Weichmachern finden ebenfalls verschiedene Polyester als Weichmacher Verwendung. Polyester-Weichmacher werden im allgemeinen hergestellt durch Veresterung von mehrwertigen Alkoholen, beispielsweise 1,2-Ethandiol, 1,2-Propandiol, 1,3-Propandiol, 1,3-Butandiol, 1,4-Butandiol, 1,5-Pentandiol oder 1,6-Hexandiol, mit einer Polycarbonsäure, wie Bernsteinsäure, Glutarsäure, Adipinsäure, Pimelinsäure, Korksäure, Sebacinsäure oder Azelainsäure. Optional können endständige Alkoholgruppen (bei Synthesen mit Alkoholüberschuß) mit Monocarbonsäuren, beispielsweise Essigsäure, bzw. endständige Säuregruppen (bei Synthesen mit Säureüberschuß) mit einwertigen Alkoholen, wie 2-Ethylhexanol, Isononanol, 2-Propyl-heptanol oder Isodecanol, abgeschlossen werden. Polyester-Weichmacher werden vor allem bei der Herstellung von Folien, Beschichtungen, Profilen, Bodenbelägen und Kabeln auf Weich-PVC-Basis eingesetzt, wenn erhöhte Anforderungen an die Extraktionsbeständigkeit, v. a. gegenüber Benzin, Ölen und Fetten, die UV-Beständigkeit und die Flüchtigkeit des Weichmachers gestellt werden.

Die US 5281647 beschreibt ein Verfahren zur Herstellung von Polyester-Weichmachern, bei dem Dicarbonsäuren, wie Sebacinsäure, Glutarsäure, Azelainsäure und/oder Adipinsäure mit sterisch stark gehinderten Diolen und geringen Mengen linearer Diole zu Polyestern umgesetzt werden und anschließend die sauren Endgruppen der Polyester mit einem weiteren Alkohol verestert werden, sowie deren Verwendung zur Weichmachung von Kautschuk und PVC. Konkret beschrieben wird die Herstellung eines Polyester-Weichmachers auf der Basis von Adipinsäure, Trimethylpentandiol und Propylenglykol wobei die endständigen Säuregruppen mit 2-Ethylhexanol verestert werden. Diese Polyester sollen als Weichmacher für PVC und Kautschuk geeignet sein und sich durch eine hohe Extraktionsbeständigkeit gegenüber Ölen und Seifenwasser auszeichnen.

Die RO 104737 beschreibt Polyester-Weichmacher auf Basis von Adipinsäure und Propylenglykol, deren endständige Säuregruppen mit 2-Ethylhexanol verestert sind. Die Polyester sollen als Weichmacher für PVC geeignet sein und sich insbesondere durch eine gute Lagerstabilität auszeichnen.

Die EP 1113034 beschreibt Polyester-Weichmacher, erhältlich durch Umsetzung von aliphatischen Dicarbonsäuren, Neopentylalkohol, mindestens einem weiteren Diol und isomeren Nonanolen, ein Verfahren zu ihrer Herstellung und ihre Verwendung als Weichmacher. Die Polyester sollen sich vor allem durch eine geringe Migrationsneigung auszeichnen, insbesondere gegenüber Acrylnitril-Butadien-Styrol-Copolymeren, Polystyrol und Polymethylmethacrylat.

Zum Einstellen der gewünschten Weichmacher-Eigenschaften ist auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Weichmacher, der gute Geliereigenschaften verleiht.

Die WO 03/029339 offenbart PVC-Zusammensetzungen enthaltend Cyclohexanpolycarbonsäureester sowie Mischungen aus Cyclohexanpolycarbonsäureester mit anderen Weichmachern. Als geeignete andere Weichmacher werden nicht-polymere Ester-Weichmacher, wie Terephthalsäureester, Phthalsäureester, Isophthalsäureester und Adipinsäureester genannt. Des Weiteren werden PVC-Zusammensetzungen offenbart, die Mischungen von Cyclohexanpolycarbonsäureestern mit verschiedenen schnellgelierenden Weichmachern enthalten. Als geeignete schnellgelierende Weichmacher werden insbesondere verschiedene Benzoate, aromatische Sulfonsäureester, Citrate sowie Phosphate genannt. Polyester-Weichmacher werden lediglich im Rahmen einer ganz pauschalen Aufzählung erwähnt ohne in der Patentschrift in irgendeiner Weise konkretisiert zu werden.

Ein wesentlicher Nachteil der meisten oben beschriebenen Weichmacher bzw. Weichmacherzusammensetzungen, die aus toxikologischer Sicht als Alternative zu Phthalaten in Frage kommen, besteht jedoch darin, dass sie keine ausreichend gute Verträglichkeit mit Kunststoffen, insbesondere mit PVC, besitzen, d. h. sie schwitzen in erheblichem Umfang während des Gebrauchs aus und führen somit zu einem partiellen Verlust der elastischen Eigenschaften der unter Verwendung dieser Weichmacher hergestellten weichgemachten Kunststoffe. Dies gilt vor allem für die Polyester-Weichmacher, deren Einsatz für viele Anwendungen, bei denen erhöhte Anforderungen an die Extraktionsbeständigkeit, v. a. gegenüber Benzin, Ölen und Fetten, die UV-Beständigkeit und die Flüchtigkeit des Weichmachers gestellt werden, unabdingbar ist.

Der vorliegenden Erfindung liegt die Aufgabe zugrunde, eine toxikologisch unbedenkliche Weichmacher-Zusammensetzung, enthaltend mindestens einen Polyester-Weichmacher für thermoplastische Polymere und Elastomere, zur Verfügung zu stellen, die eine hohe Verträglichkeit mit dem weichzumachenden Polymer aufweist und dadurch gar nicht oder nur in geringem Umfang während des Gebrauchs zum Ausschwitzen neigt, wodurch die elastischen Eigenschaften der unter Verwendung dieser Weichmacher hergestellten weichgemachten Kunststoffe auch über längere Zeiträume erhalten bleiben.

### ZUSAMMENFASSUNG DER ERFINDUNG

Diese Aufgabe wird überraschenderweise gelöst durch eine Weichmacher-Zusammensetzung, enthaltend
a) eine oder mehrere Verbindungen der allgemeinen Formel (I), 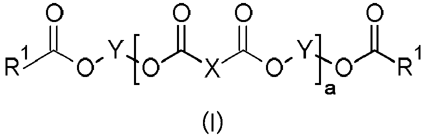 worin
   - X: für eine unverzweigte oder verzweigte C₂-C₈-Alkylengruppe oder eine unverzweigte oder verzweigte C₂-C₈-Alkenylengruppe, enthaltend wenigstens eine Doppelbindung, steht, wobei in dem Fall, dass in der Verbindung der allgemeinen Formel (I) mehrere Gruppen X enthalten sind, diese die gleiche Bedeutung haben,
   - Y: jeweils für eine unverzweigte oder verzweigte C₂-C₁₂-Alkylengruppe oder eine unverzweigte oder verzweigte C₂-C₁₂-Alkenylengruppe, enthaltend wenigstens eine Doppelbindung, steht, wobei in der Verbindung der allgemeinen Formel (I) die Gruppen Y nicht alle die gleiche Bedeutung haben,
   - a: für eine ganze Zahl von 1 bis 100 steht und
   - R¹: unabhängig voneinander ausgewählt sind unter unverzweigten oder verzweigten C₁-C₁₂-Alkylresten,
   und
b) eine oder mehrere Verbindungen der allgemeinen Formel (II), 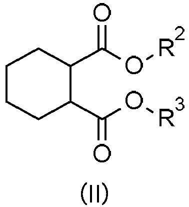 worin
   R² und R³ unabhängig voneinander ausgewählt sind unter verzweigten und unverzweigten C₇-C₁₂-Alkylresten,
   wobei der Gehalt an Verbindungen der allgemeinen Formel (I) in der Weichmacher-Zusammensetzung 10 bis 99 Gew.-% beträgt und der Gehalt an Verbindungen der allgemeinen Formel (II) in der Weichmacher-Zusammensetzung 1 bis 90 Gew.-% beträgt.

Ein weiterer Gegenstand der Erfindung sind Formmassen, die wenigstens ein thermoplastisches Polymer oder Elastomer und eine Weichmacher-Zusammensetzung, wie zuvor und im Folgenden definiert, enthalten.

Ein weiterer Gegenstand der Erfindung ist die Verwendung einer Weichmacher-Zusammensetzung, wie zuvor und im Folgenden definiert, als Weichmacher für thermoplastische Polymere, insbesondere Polyvinylchlorid (PVC), und Elastomere.

Ein weiterer Gegenstand der Erfindung ist die Verwendung dieser Formmassen zur Herstellung von Formkörpern und Folien.

### BESCHREIBUNG DER ERFINDUNG

Die erfindungsgemäßen Weichmacher-Zusammensetzungen weisen wenigstens einen der folgenden Vorteile auf:
- Die erfindungsgemäßen Weichmacher-Zusammensetzungen zeichnen sich durch eine hohe Verträglichkeit mit den weichzumachenden Polymeren, insbesondere PVC, aus.
- Die erfindungsgemäßen Weichmacher-Zusammensetzungen neigen gar nicht oder nur in geringem Umfang zum Ausschwitzen während des Gebrauchs der Endprodukte. Dadurch bleiben die elastischen Eigenschaften der unter Verwendung dieser Weichmacher-Zusammensetzungen hergestellten weichgemachten Kunststoffe auch über längere Zeiträume erhalten.
- Die erfindungsgemäßen Weichmacher-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäßen Weichmacher-Zusammensetzungen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäßen Weichmacher-Zusammensetzungen enthaltenen Verbindungen (I) können leicht zugängliche Edukte verwendet werden.
- Die Verfahren zur Herstellung der erfindungsgemäß eingesetzten Verbindungen (I) sind einfach und effizient. Die Verbindungen können daher problemlos in großtechnischem Maßstab bereitgestellt werden.

Im Rahmen der vorliegenden Erfindung bezieht sich der Ausdruck "C₂-C₁₂-Alkylen" auf zweiwertige Kohlenwasserstoffreste mit 2 bis 12 Kohlenstoffatomen. Die zweiwertigen Kohlenwasserstoffreste können unverzweigt oder verzweigt sein. Dazu zählen beispielsweise 1,2-Ethylen, 1,2-Propylen, 1,3-Propylen, 1,3-Butylen, 1,4-Butylen, 2-Methyl-1,3-propylen, 1,1-Dimethyl-1,2-ethylen, 1,4-Pentylen, 1,5-Pentylen, 2-Methyl-1,4-butylen, 2,2-Dimethyl-1,3-propylen, 1,6-Hexylen, 2-Methyl-1,5-pentylen, 3-Methyl-1,5-pentylen, 2,3-Dimethyl-1,4-butylen, 1,7-Heptylen, 2-Methyl-1,6-hexylen, 3-Methyl-1,6-hexylene, 2-Ethyl-1,5-pentylen, 3-Ethyl-1,5-pentylen, 2,3-Dimethyl-1,5-pentylen, 2,4-Dimethyl-1,5-pentylen, 1,8-Octylen, 2-Methyl-1,7-heptylen, 3-Methyl-1,7-heptylen, 4-Methyl-1,7-heptylen, 2-Ethyl-1,6-hexylen, 3-Ethyl-1,6-hexylen, 2,3-Dimethyl-1,6-hexylen, 2,4-Dimethyl-1,6-hexylen, 1,9-Nonylen, 2-Methyl-1,8-Octylen, 3-Methyl-1,8-octylen, 4-Methyl-1,8-octylen, 2-Ethyl-1,7-heptylen, 3-Ethyl-1,7-heptylen, 1,10-Decylen, 2-Methyl-1,9-nonylen, 3-Methyl-1,9-nonylen, 4-Methyl-1,9-nonylen, 5-Methyl-1,9-nonylen, 1,11-Undecylen, 2-Methyl-1,10-decylen, 3-Methyl-1,10-decylen, 5-Methyl-1,10-decylen, 1,12-Dodecylen und dergleichen.

Der Ausdruck "C₂-C₁₂-Alkylen" beinhaltet in seiner Definition auch die Ausdrücke "C₂-C₈-Alkylen", "C₂-C₆-Alkylen", "C₂-C₅-Alkylen" und "C₃-C₅-Alkylen".

Bevorzugt handelt es sich bei "C₂-C₁₂-Alkylen" um verzweigte oder unverzweigte C₂-C₈-Alkylengruppen, besonders bevorzugt um verzweigte oder unverzweigte C₂-C₅-Alkylengruppen, ganz besonders bevorzugt um verzweigte oder unverzweigte C₃-C₅-Alkylengruppen und insbesondere um 1,2-Propylen, 1,3-Propylen, 1,4-Butylen und 2,2-Dimethyl-1,3-propylen.

Bevorzugt handelt es sich bei "C₂-C₈-Alkylen" um verzweigte oder unverzweigte C₂-C₆-Alkylengruppen, besonders bevorzugt um verzweigte oder unverzweigte C₂-C₅-Alkylengruppen, insbesondere um 1,3-Propylen und 1,4-Butylen.

Im Rahmen der vorliegenden Erfindung bezieht sich der Ausdruck "C₂-C₁₂-Alkenylen" auf zweiwertige Kohlenwasserstoffreste mit 2 bis 12 Kohlenstoffatomen, welche unverzweigt oder verzweigt sein können, wobei die Hauptkette wenigstens eine Doppelbindung, beispielsweise 1, 2 oder 3 Doppelbindungen, aufweist. Dazu zählen beispielsweise Ethenylen, Propenylen, 1-Methyl-ethenylen, 1-Butenylen, 2-Butenylen, 1-Methylpropenylen, 2-Methylpropenylen, 1-Pentenylen, 2-Pentenylen, 1-Methyl-1-butenylen, 1-Methyl-2-butenylen, 1-Hexenylen, 2-Hexenylen, 3-Hexenylen, 1-Methyl-1-pentenylen, 1-Methyl-2-pentenylen, 1-Methyl-3-pentenylen, 1,4-Dimethyl-1-butenylen, 1,4-Dimethyl-2-butenylen, 1-Heptenylen, 2-Heptenylen, 3-Heptenylen, 1-Octenylen, 2-Octenylen, 3-Octenylen, Nonenylen, Decenylen, Undecenylen, Dodecenylen und dergleichen.

Die Doppelbindungen in den Alkenylengruppen können unabhängig voneinander in der E- als auch in Z-Konfiguration oder als Mischung beider Konfigurationen vorliegen.

Der Ausdruck "C₂-C₁₂-Alkenylen" beinhaltet in seiner Definition auch die Ausdrücke "C₂-C₈-Alkenylen", "C₂-C₆-Alkenylen" und "C₂-C₅-Alkenylen".

Besonders bevorzugt handelt es sich bei der C₂-C₁₂-Alkenylengruppe um verzweigte und unverzweigte C₂-C₈-Alkenylengruppen mit einer Doppelbindung, insbesondere um verzweigte und unverzweigte C₂-C₅-Alkenylengruppen mit einer Doppelbindung.

Besonders bevorzugt handelt es sich bei der C₂-C₈-Alkenylengruppe um verzweigte und unverzweigte C₂-C₈-Alkenylengruppen mit einer Doppelbindung, ganz besonders bevorzugt um verzweigte und unverzweigte C₂-C₆-Alkenylengruppen mit einer Doppelbindung, insbesondere um verzweigte und unverzweigte C₂-C₅-Alkenylengruppen mit einer Doppelbindung.

Im Rahmen der vorliegenden Erfindung bezieht sich der Ausdruck "C₁-C₁₂-Alkyl" auf unverzweigte oder verzweigte Alkylgruppen mit 1 bis 12 Kohlenstoffatomen. Dazu zählen beispielsweise Methyl, Ethyl, n-Propyl, Isopropyl, n-Butyl, Isobutyl, sec-Butyl, tert-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 1-Ethylbutyl, 2-Ethylbutyl, n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und dergleichen.

Der Ausdruck "C₁-C₁₂-Alkyl" beinhaltet in seiner Definition auch die Ausdrücke "C₁-C₈-Alkyl" und "C₁-C₅-Alkyl" sowie "C₇-C₁₂-Alkyl" und "C₈-C₁₂-Alkyl".

Bevorzugt handelt es sich bei "C₁-C₁₂-Alkyl" um verzweigte oder unverzweigte C₁-C₈-Alkylgruppen, insbesondere um verzweigte oder unverzweigte C₁-C₅-Alkylgruppen.

Bevorzugt handelt es sich bei "C₇-C₁₂-Alkyl" um verzweigte oder unverzweigte C₇-C₁₂-Alkylgruppen, insbesondere um verzweigte oder unverzweigte C₈-C₁₁-Alkylgruppen.

Sofern nicht anders angegeben beziehen sich die Messnormen und Standardgrößen auf die jeweilige DIN, ISO, IUPAC Norm oder Literatur zum Zeitpunkt des Anmeldetags.

Sofern nicht anders angegeben steht die Abkürzung "phr" für "Gewichtsteile pro 100 Gewichtsteile Polymer".

### Verbindungen der allgemeinen Formel (I)

Bevorzugt steht X in der allgemeinen Formel (I) für eine unverzweigte oder verzweigte C₂-C₈-Alkylengruppe, besonders bevorzugt für eine unverzweigte oder verzweigte C₂-C₆-Alkylengruppe. Insbesondere steht X in der allgemeinen Formel (I) für eine unverzweigte C₂-C₅-Alkylengruppe, speziell für 1,3-Propylen und 1,4-Butylen.

Bevorzugt steht Y in der allgemeinen Formel (I) für eine unverzweigte oder verzweigte C₂-C₁₂-Alkylengruppe, besonders bevorzugt für eine unverzweigte oder verzweigte C₂-C₈-Alkylengruppe. Insbesondere steht Y in der allgemeinen Formel (I) für eine verzweigte oder unverzweigte C₂-C₅-Alkylengruppe und speziell für 1,2-Propylen, 1,3-Propylen, 1,2-Butylen, 1,3-Butylen, 1,4-Butylen und 2,2-Dimethyl-1,3-propylen.

Vorzugsweise steht a in den Verbindungen der allgemeinen Formel (I) für eine ganze Zahl von 1 bis 70, besonders bevorzugt für eine ganze Zahl von 2 bis 50, insbesondere für eine ganze Zahl von 5 bis 40.

Bevorzugt stehen die Reste R¹ in der allgemeinen Formel (I) unabhängig voneinander für Methyl, Ethyl, n-Propyl, Isopropyl, n-Butyl, Isobutyl, n-Pentyl, 2-Pentyl, 2-Methylbutyl, 3-Methylbutyl, n-Hexyl, 1-Methylpentyl, 2-Methylpentyl, 1-Ethylbutyl, 2-Ethylbutyl, n-Heptyl, 1-Methylhexyl, 2-Methylhexyl, 1-Ethylpentyl, 2-Ethylpentyl, 1-Propylbutyl, n-Octyl, Isooctyl, 2-Ethylhexyl, n-Nonyl, Isononyl, 2-Propylhexyl, n-Decyl, Isodecyl oder 2-Propylheptyl. Besonders bevorzugt stehen die Reste R¹ in der allgemeinen Formel (I) beide für Methyl, beide für Ethyl, beide für n-Propyl, beide für Isopropyl, beide für n-Butyl, beide für Isobutyl oder beide für n-Pentyl.

Bei den in den erfindungsgemäßen Weichmacher-Zusammensetzungen eingesetzten Verbindungen der allgemeinen Formel (I) handelt es sich aufgrund deren polymeren Charakters nicht um einheitliche Verbindungen sondern um Gemische verschiedener Verbindungen. Zum einen weisen die Verbindungen (I) verschiedene Kettenlängen auf, d.h. sie sind durch eine mittlere Molmasse gekennzeichnet. Zum anderen können beide Reste R¹ sowie die in den Wiederholungseinheiten enthaltenen Gruppen X und Y voneinander verschieden sein. Des Weiteren kann es sich bei den Resten R¹ um Isomerengemische handeln, wie im Folgenden definiert.

Die in den erfindungsgemäß Weichmacher-Zusammensetzungen enthaltenen Polyester-Weichmacherder allgemeinen Formel (I) weisen im Allgemeinen eine gewichtsmittlere Molmasse im Bereich von 500 bis 15000 g/mol, bevorzugt im Bereich von 2000 bis 10000 g/mol, besonders bevorzugt im Bereich von 3000 bis 8000 g/mol, auf. Die gewichtsgemittelte Molmasse wird in der Regel mittels Gel-Permeations-Chromatographie (GPC) in Tetrahydrofuran gegen Polystyrolstandard bestimmt.

Die Gel-Permeations-Chromatographie kann an einem handelsüblichen Gerät, beispielsweise GPC-System Infinity 1100 der Firma Agilent Technologies durchgeführt werden. Solche Messsysteme bestehen üblicherweise aus Pumpe, Säulenheizung, Säulen und einem Detektor, beispielsweise DRI Agilent 1200.
Als Elutionsmittel kann THF verwendet werden, welches beispielsweise mit einer Durchflussgeschwindigkeit von 1 ml/min durch eine Säulenkombination von zwei auf 35 °C temperierten Säulen fließt. Die in einer Konzentration von 2 mg/ml in THF aufgelösten Proben werden üblicherweise vor dem Injizieren filtriert. Die Auswertung der erhaltenen Messwerte erfolgt üblicherweise über eine Kalibrationskurve. Diese kann beispielsweise mit eng verteilten Polystyrol-Standards erhalten werden, welches beispielsweise von der Firma Polymer Laboratories mit Molekulargewichten von M = 162 bis M = 50400 erhältlich ist.

Die in den erfindungsgemäß Weichmacher-Zusammensetzungen enthaltenen Polyester-Weichmacher der allgemeinen Formel (I) besitzen im Allgemeinen eine Dichte bei 20 °C nach DIN 51757 im Bereich von 1,000 bis 1,300 g/cm³, bevorzugt im Bereich von 1,100 bis 1,200 g/cm³, besonders bevorzugt im Bereich von 1,120 bis 1,160 g/cm³.

Die in den erfindungsgemäß Weichmacher-Zusammensetzungen enthaltenen Polyester-Weichmacher der allgemeinen Formel (I) besitzen im Allgemeinen eine Viskosität bei 20 °C nach DIN EN ISO 3219 im Bereich von 1000 bis 20000 mPa*s, bevorzugt im Bereich von 1500 bis 15000 mPa*s, besonders bevorzugt im Bereich von 2000 bis 14000 mPa*s. Zur Bestimmung der dynamischen Viskosität nach DIN EN ISO 3219 wird eine Probe des betreffenden Polymerweichmachers auf den Stator der Rotor-Stator-Einheit, bestehend aus einer Kegel-Platte Messeinheit mit 25 mm Durchmesser, eines geeigneten Rheometers aufgebracht. Die dynamische Viskosität wird anschließend durch eine Rotationsmessung bei 20 °C und 128 U/Min. bestimmt.

Die in den erfindungsgemäß Weichmacher-Zusammensetzungen enthaltenen Polyester-Weichmacher der allgemeinen Formel (I) besitzen im Allgemeinen einen Brechungsindex nD20 nach DIN 51423 im Bereich von 1,450 bis 1,485, bevorzugt im Bereich von 1,460 und 1,480, besonders bevorzugt im Bereich von 1,462 bis 1,472.

### Verbindungen der allgemeinen Formel (II)

Vorzugsweise stehen in den Verbindungen der allgemeinen Formel (II) die Reste R² und R³ unabhängig voneinander für n-Octyl, n-Nonyl, Isononyl, 2-Ethylhexyl, Isodecyl, 2-Propylheptyl, n-Undecyl oder Isoundecyl.

In einer weiteren bevorzugten Ausführungsform sind in den Verbindungen der allgemeinen Formel (II) die Reste R² und R³ gleich.

Besonders bevorzugt stehen in den Verbindungen der allgemeinen Formel (II) die Reste R² und R³ beide für 2-Ethylhexyl, beide für Isononyl oder beide für 2-Propylheptyl.

Eine speziell bevorzugte Verbindung der allgemeinen Formel (II) ist Di-(isononyl)-1,2-cyclohexandicarboxylat.

### Besondere Ausführungsformen

In einer bevorzugten Ausführungsform der vorliegenden Erfindung steht in den Verbindungen der allgemeinen Formeln (I) und (II)
- X: für eine unverzweigte oder verzweigte C₂-C₆-Alkylengruppe,
- Y: unabhängig voneinander für eine unverzweigte oder verzweigte C₂-C₅-Alkylengruppe,
- a: für eine ganze Zahl von 5 bis 40,
- R¹: unabhängig voneinander für eine C₁-C₁₂-Alkylgruppe und
- R² und R³: beide für eine C₈-C₁₁-Alkylgruppe.

In einer besonders bevorzugten Ausführungsform der vorliegenden Erfindung steht in den Verbindungen der allgemeinen Formeln (I) und (II)
- X: für eine unverzweigte C₂-C₅-Alkylengruppe,
- Y: unabhängig voneinander für eine unverzweigte oder verzweigte C₃-C₅-Alkylengruppe,
- a: für eine ganze Zahl von 5 bis 40,
- R¹: beide für Methyl, beide für Ethyl, beide für n-Propyl, beide für Isopropyl, beide für n-Butyl, beide für Isobutyl oder beide für n-Pentyl und
- R² und R³: beide für 2-Ethylhexyl, beide für Isononyl oder beide für 2-Propylheptyl.

Durch Anpassung der Anteile der Verbindungen (I) und (II) in der erfindungsgemäßen Weichmacher-Zusammensetzung können die Weichmacher-Eigenschaften auf den entsprechenden Verwendungszweck abgestimmt werden. Dies kann durch routinemäßige Versuche bewerkstelligt werden. Für den Einsatz in speziellen Anwendungsbereichen kann es gegebenenfalls hilfreich sein der erfindungsgemäßen Weichmacher-Zusammensetzungen weitere von den Verbindungen (I) und (II) verschiedene Weichmacher hinzuzufügen. Aus diesem Grund kann die erfindungsgemäße Weichmacher-Zusammensetzung gegebenenfalls wenigstens einen weiteren von den Verbindungen (I) und (II) verschiedenen Weichmacher enthalten.

Der von den Verbindungen (I) und (II) verschiedene zusätzliche Weichmacher ist ausgewählt unter Phthalsäurealkylaralkylester, Trimellitsäuretrialkylestern, Benzoesäurealkylestern, Dibenzoesäureestern von Glycolen, Hydroxybenzoesäureestern, Monoestern gesättigter Monocarbonsäuren, Monoestern gesättigter Hydroxymonocarbonsäuren, Estern ungesättigter Monocarbonsäuren, Estern gesättigter Hydroxydicarbonsäuren, Amiden und Estern von aromatischen Sulfonsäuren, Alkylsulfonsäureestern, Glycerinestern, Isosorbidestern, Phosphorsäureestern, Citronensäurediestern, Citronensäuretriestern, Alkylpyrrolidonderivaten, 2,5-Furandicarbonsäureestern, 2,5-Tetrahydrofurandicarbonsäureestern, epoxidierten Pflanzenölen,epoxidierten Fettsäuremonoalkylestern, 1,3-Cyclohexandicarbonsäuredialkylestern, 1,4-Cyclohexandicarbonsäuredialkylestern, von Verbindungen (I) verschiedenen Polyestern aus aliphatischen und/oder aromatischen Polycarbonsäuren mit wenigstens zweiwertigen Alkoholen.

Ein geeigneter Phthalsäurealkylaralkylester ist beispielsweise Benzylbutylphthalat. Geeignete Trimellitsäuretrialkylester weisen bevorzugt unabhängig voneinander jeweils 4 bis 13 C-Atome, insbesondere 7 bis 11 C-Atome, in den Alkylketten auf. Geeignete Benzoesäurealkylester weisen bevorzugt unabhängig voneinander jeweils 7 bis 13 C-Atome, insbesondere 9 bis 13 C-Atome, in den Alkylketten auf. Geeignete Benzoesäurealkylester sind beispielsweise Isononylbenzoat, Isodecylbenzoat oder 2-Propylheptylbenzoat. Geeignete Dibenzoesäureester von Glycolen sind Diethylenglycoldibenzoat, Dipropylenglycoldibenzoat, Tripropylenglycoldibenzoat und Dibutylenglycoldibenzoat. Geeignete Monoester gesättigter Monocarbonsäuren und gesättigter Hydroxymonocarbonsäuren sind beispielsweise Ester der Essigsäure, Buttersäure, Valeriansäure oder Milchsäure. Geeignete Ester ungesättigter Monocarbonsäuren sind beispielsweise Ester der Acrylsäure. Geeignete Ester gesättigter Hydroxydicarbonsäuren sind beispielsweise Ester der Äpfelsäure. Geeignete Alkylsulfonsäureester weisen vorzugsweise einen Alkylrest mit 8 bis 22 C-Atomen auf. Dazu zählen beispielsweise Phenyl- oder Cresylester der Pentadecylsulfonsäure. Geeignete Isosorbidester sind Isosorbiddiester, die bevorzugt mit C₈-C₁₃-Carbonsäuren verestert sind. Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenylphosphat. In den Citronensäurediestern und Citronensäuretriestern kann die OH-Gruppe in freier oder carboxylierter Form, bevorzugt acetyliert, vorliegen. Die Alkylreste der acetylierten Citronensäuretriester weisen bevorzugt unabhängig voneinander 4 bis 8 C-Atome, insbesondere 6 bis 8 C-Atome, auf. Geeignet sind Alkylpyrrolidonderivate mit Alkylresten von 4 bis 18 C-Atomen. Geeignete 2,5-Furandicarbonsäuredialkylester weisen unabhängig voneinander jeweils 7 bis 13 C-Atome, bevorzugt 8 bis 12 C-Atome, in den Alkylketten auf. Geeignete 2,5-Tetrahydrofurandicarbonsäuredialkylester weisen unabhängig voneinander jeweils 4 bis 13 C-Atome, bevorzugt 8 bis 12 C-Atome, in den Alkylketten auf. Ein geeignetes epoxidiertes Pflanzenöl ist beispielsweise epoxidiertes Sojaöl, z.B. erhältlich von der Firma Galata-Chemicals, Lampertheim, Germany. Epoxidierte Fettsäuremonoalkylester, beispielsweise erhältlich unter dem Handelsnamen reFlex^{™} der Firma PolyOne, USA, sind auch geeignet. Geeignete Cyclohexan-1,4-dicarbonsäureester weisen unabhängig voneinander jeweils 4 bis 13 C-Atome, insbesondere 8 bis 11 C-Atome, in den Alkylketten auf. Ein geeigneter Cyclohexan-1,4-dicarbonsäureester ist beispielsweise Di-(2-ethylhexyl)-cyclohexan-1,4-dicarboxylat.

In allen zuvor genannten Fällen können die Alkylreste jeweils linear oder verzweigt und jeweils gleich oder voneinander verschieden sein. Auf die eingangs gemachten allgemeinen Ausführungen zu geeigneten und bevorzugten Alkylresten wird Bezug genommen.

Der Gehalt des wenigstens einen weiteren von den Verbindungen (I) und (II) verschiedenen Weichmachers in der erfindungsgemäßen Weichmacher-Zusammensetzung beträgt üblicherweise 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge des wenigstens einen weiteren Weichmachers und der Verbindungen (I) und (II) in der Weichmacher-Zusammensetzung. Falls ein weiterer Weichmacher vorhanden ist, dann vorzugsweise in einer Konzentration von wenigstens 0,01 Gew.-%, bevorzugt wenigstens 0,1 Gew.-%, bezogen auf die Gesamtmenge des wenigstens einen weiteren Weichmachers und der Verbindungen (I) und (II) in der Weichmacher-Zusammensetzung.

In einer bevorzugten Ausführungsform enthält die erfindungsgemäße Weichmacher-Zusammensetzung keinen weiteren von den Verbindungen (I) und (II) verschiedenen Weichmacher.

Der Gehalt der Verbindungen der allgemeinen Formel (I) in der erfindungsgemäßen Weichmacher-Zusammensetzung beträgt 10 bis 99 Gew.-%, bevorzugt 30 bis 95 Gew.-% und insbesondere 50 bis 90 Gew.-%, bezogen auf die Gesamtmenge der Verbindungen (I) und (II) in der Weichmacher-Zusammensetzung.

Der Gehalt an Verbindungen der allgemeinen Formel (II) in der erfindungsgemäßen Weichmacher-Zusammensetzung beträgt 1 bis 90 Gew.-%, bevorzugt 5 bis 70 Gew.-% und insbesondere 10 bis 50 Gew.-%, bezogen auf die Gesamtmenge der Verbindungen (I) und (II) in der Weichmacher-Zusammensetzung.

In der erfindungsgemäßen Weichmacher-Zusammensetzung liegt das Gewichtsverhältnis zwischen Verbindungen der allgemeinen Formel (II) und Verbindungen der allgemeinen Formel (I) bevorzugt im Bereich von 1 : 100 bis 10 : 1, besonders bevorzugt im Bereich von 1 : 20 bis 2 : 1 und insbesondere im Bereich von 1 : 10 bis 1 : 1.

### Formmassen

Ein weiterer Gegenstand der vorliegenden Erfindung betrifft eine Formmasse, enthaltend wenigstens ein Polymer und eine Weichmacher-Zusammensetzung wie zuvor definiert.

In einer bevorzugten Ausführungsform handelt es sich bei dem in der Formmasse enthaltenen Polymer um ein thermoplastisches Polymer.

Als thermoplastische Polymere kommen alle thermoplastisch verarbeitbaren Polymeren in Frage. Insbesondere sind diese thermoplastischen Polymere ausgewählt unter:
- Homo- oder Copolymere, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Estern von C₂-C₁₀-Alkylsäuren mit Vinylalkohol, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, Acrylnitril, Methacrylnitril, Maleinsäureanhydrid und α,β-ethylenisch ungesättigten Mono- und Dicarbonsäuren;
- Homo- und Copolymere von Vinylacetaten;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
- Polyethersulfonen,
- Cellulosealkylestern,
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder CelluloseAcetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Ein weiterer Gegenstand der vorliegenden Erfindung betrifft Formmassen, enthaltend wenigstens ein Elastomer und wenigstens eine Weichmacher-Zusammensetzung wie zuvor definiert.

Je nachdem welches thermoplastische Polymer oder thermoplastische Polymergemisch in der Formmasse enthalten ist, werden zur Erzielung der gewünschten thermoplastischen Eigenschaften unterschiedliche Mengen Weichmacher benötigt. Dies kann durch wenige routinemäßige Versuche ermittelt werden. Handelt es sich bei dem in der erfindungsgemäßen Formmasse enthaltenen wenigstens einen thermoplastischen Polymer nicht um PVC, beträgt der Gehalt der erfindungsgemäßen Weichmacher-Zusammensetzung in der Formmasse in der Regel 0,5 bis 300 phr (parts per hundred resin = Gewichtsteile pro hundert Gewichtsteile Polymer), bevorzugt 1,0 bis 130 phr, besonders bevorzugt 2,0 bis 100 phr.

Im Speziellen handelt es sich bei dem in der erfindungsgemäßen Formmasse enthaltenen wenigstens einem thermoplastischen Polymer um Polyvinylchlorid (PVC).

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Der K-Wert, der die Molmasse des PVC charakterisiert und nach DIN 53726 bestimmt wird, liegt für das erfindungsgemäß weichgemachte PVC meist im Bereich von 57 und 90, bevorzugt im Bereich von 61 und 85, insbesondere im Bereich von 64 und 80.

Im Rahmen der Erfindung liegt der Gehalt an PVC der Gemische bei 20 bis 95 Gew.-%, bevorzugt bei 40 bis 90 Gew.-% und insbesondere bei 45 bis 85 Gew.-%.

Handelt es sich bei dem thermoplastischen Polymer in den erfindungsgemäßen Formmassen um Polyvinylchlorid beträgt der Gesamtweichmachergehalt in der Formmasse 5 bis 300 phr, bevorzugt 15 bis 150 phr, besonders bevorzugt 30 bis 120 phr.

Ein weiterer Gegenstand der vorliegenden Erfindung betrifft Formmassen, enthaltend ein Elastomer und eine erfindungsgemäße Weichmacher-Zusammensetzung.

Bei dem in den erfindungsgemäßen Formmassen enthaltenen Elastomer kann es sich um einen natürlichen Kautschuk (NR), oder einen auf synthetischem Wege hergestellten Kautschuk, oder um Mischungen davon handeln. Bevorzugte auf synthetischem Wege hergestellte Kautschuke sind beispielsweise PolyisoprenKautschuk (IR), Styrol-Butadien-Kautschuk (SBR), Butadien-Kautschuk (BR), Nitril-Butadien-Kautschuk (NBR) oder Chloropren-Kautschuk (CR).

Bevorzugt sind Kautschuke oder Kautschuk-Mischungen, welche sich mit Schwefel vulkanisieren lassen.

Im Rahmen der Erfindung liegt der Gehalt an Elastomer in den erfindungsgemäßen Formmassen bei 20 bis 95 Gew.-%, bevorzugt bei 45 bis 90 Gew.-% und insbesondere bei 50 bis 85 Gew.-%, bezogen auf das Gesamtgewicht der Formmasse.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, wie Phenolharze, Vulkanisier- oder Vernetzungsmittel, Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Handelt es sich bei dem Polymer in den erfindungsgemäßen Formmassen um Elastomere, speziell Kautschuke, beträgt der Gehalt der erfindungsgemäßen Weichmacherzusammensetzung, wie oben definiert, in der Formmasse 1,0 bis 60 phr, bevorzugt 2,0 bis 40 phr, besonders bevorzugt 3,0 bis 30 phr.

Zusätzlich kann es sich bei dem Polymer in den erfindungsgemäßen Formmassen um Mischungen aus PVC mit einem Elastomer handeln. Hinsichtlich hierzu geeigneter und bevorzugter Elastomere wird auf die vorangegangenen Ausführungen Bezug genommen. Der Gehalt des Elastomers in diesen Polymermischungen liegt üblicherweise bei 1 bis 50 Gew.-%, bevorzugt bei 3 bis 40 Gew.-%, insbesondere bei 5 bis 30 Gew.-%.

Je nachdem wie groß der Anteil des Elastomers in der Polymermischung ist, kann die zur Erzielung der gewünschten Eigenschaften benötigte Menge an erfindungsgemäßer Weichmacher-Zusammensetzung in diesen Formmassen stark schwanken.

Der Gehalt an der erfindungsgemäßen Weichmacherzusammensetzung in diesen Formmassen liegt üblicherweise im Bereich von 0,5 bis 300 phr, bevorzugt im Bereich von 1,0 bis 150 phr, besonders bevorzugt im Bereich von 2,0 bis 120 phr.

### Zusatzstoffe Formmasse

Im Rahmen der Erfindung können die Formmassen, enthaltend wenigstens ein thermoplastisches Polymer, andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel vermindern die Haftung zwischen den zu verarbeitenden Kunststoffen und Metalloberflächen und dienen dazu, Reibungskräften beim Mischen, Plastifizieren und Verformen entgegenzuwirken.

Als Gleitmittel können die erfindungsgemäßen Formmassen alle die für die Verarbeitung von Kunststoffen üblichen Gleitmittel enthalten. In Betracht kommen beispielsweise Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, beispielsweise CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente und Dioxazinpigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid und Borverbindungen verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren, z.B. UV-Absorber, enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered amine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z. B. UV-Absorber, von 0,01 bis 7 %, bevorzugt 0,1 bis 5 %, besonders bevorzugt von 0,2 bis 4 % und insbesondere von 0,5 bis 3 % aufweisen.

### Herstellung der Verbindungen der allgemeinen Formel (I)

Die erfindungsgemäßen Polyester-Weichmacher werden in technisch an sich bekannter Weise, wie beispielweise beschrieben in EP 1423476B1, durch Veresterung von aliphatischen Dicarbonsäuren mit Diolen in Gegenwart von einer Monocarbonsäure als Abschlussgruppe hergestellt. Die Kettenlänge bzw. das mittlere Molgewicht der Polyester-Weichmacher wird über das Zugabeverhältnis der Dicarbonsäuren und der Dialkohole gesteuert.

Bei den Dicarbonsäuren, die zur Herstellung der Polyester-Weichmacher der allgemeinen Formel (I) eingesetzt werden, handelt es sich vorzugsweise um unverzweigte oder verzweigte C₂-C₆-Alkyldicarbonsäuren, besonders bevorzugt um unverzweigte C₂-C₅-Alkyldicarbonsäuren. Insbesondere handelt es sich bei den Dicarbonsäuren, die zur Herstellung der Polyester-Weichmacher der allgemeinen Formel (I) eingesetzt werden, um Glutarsäure und/oder Adipinsäure, speziell um Adipinsäure.

Bei den Diolen, die zur Herstellung der Polyester-Weichmacher der allgemeinen Formel (I) eingesetzt werden, handelt es sich vorzugsweise um Gemische unverzweigter oder verzweigter C2-C8-Alkyldiole, wie beispielsweise 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 2-Methyl-1,3-Pentandiol, 2,2-Dimethyl-1,3-pentandiol, 1,4-Pentandiol, 1,5-Pentandiol, 1,2-Hexandiol, 1,3-Hexandiol, 1,4-Hexandiol, 1,5-Hexandiol oder 1,6-Hexandiol. Besonders bevorzugt handelt es sich um Gemische unverzweigter und verzweigter C2-C5-Alkandiolen. Insbesondere handelt es sich bei den Diolen, die zur Herstellung der Polyester-Weichmacher der allgemeinen Formel (I) eingesetzt werden, um 1,2-Propandiol, 1,3-Butandiol, 1,4-Butandiol, oder 2,2-Dimethyl-1,3-propandiol .

Die erfindungsgemäßen Polyester-Weichmacher der allgemeinen Formel (I) enthalten als Kettenabschluss eine Monocarbonsäure vorzugsweise Essigsäure, Propionsäure, 2-Ethylhexansäure, n-Nonansäure, Isononansäure, n-Decansäure, 2-Propylheptansäure, besonders bevorzugt Essigsäure.

Speziell enthält die erfindungsgemäße Weichmacher-Zusammensetzung eine Verbindung der allgemeinen Formel (I), zu deren Herstellung die folgenden Einsatzstoffe verwendet werden:
- Adipinsäure, 1,3-Butandiol, 1,4-Butandiol und Essigsäure

Als Veresterungskatalysatoren werden in der Regel die dafür üblichen Katalysatoren eingesetzt, z. B. Mineralsäuren, wie Schwefelsäure und Phosphorsäure; organische Sulfonsäuren, wie Methansulfonsäure und p-Toluolsulfonsäure; amphotere Katalysatoren, insbesondere Titan-, Zinn (IV)- oder Zirkoniumverbindungen, wie Tetraalkoxytitane, z. B. Tetrabutoxytitan, und Zinn (IV)-oxid. Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt. Weitere detaillierte Darstellungen zur Durchführung von Veresterungsverfahren finden sich beispielsweise in der US 6,310,235, US 5,324,853, DE-A 2612355 (Derwent Abstract Nr. DW 77-72638Y) oder DE A 1945359 (DerwentAbstract Nr. DW 73-27151 U). Auf die genannten Dokumente wird in vollem Umfang Bezug genommen.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 °C durchgeführt.

Ist der Veresterungskatalysator ausgewählt unter organischen Säuren oder Mineralsäuren, wird die Veresterung üblicherweise in einem Temperaturbereich von 50 bis 160 °C durchgeführt.

Ist der Veresterungskatalysator ausgewählt unter amphoteren Katalysatoren, wird die Veresterung üblicherweise in einem Temperaturbereich von 100 bis 250 °C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht.

In einer bevorzugten Ausführungsform werden beispielsweise Disäure, Dialkohol und Monosäure sowie Isopropylbutyltitanat als Veresterungskatalysator in einem Reaktionskessel vorgelegt, zunächst auf 100 bis 150 °C erwärmt und mittels Rühren homogenisiert. Dabei destilliert der Hauptteil des Veresterungswasser ab, bei Temperaturen über 100 °C wird destillativ abgetrennt. Das Reaktionsgemisch wird dann bei Normaldruck auf 200 bis 300 °C erwärmt. Überdestillierte Alkoholkomponenten werden aus dem Azeotrop mit Wasser weitgehend abgetrennt und zurückgeführt. Anschließend wird das Reaktionsgemisch weiter auf 200 bis 300 °C erwärmt, ein Vakuum von 0 mbar bis 500 mbar angelegt und mittels Durchleiten von Stickstoff weiteres Reaktionswasser aus dem Reaktionsgemisch entfernt. Das Reaktionsgemisch wird so lange unter Vakuum und Durchleiten von Stickstoff bei 200 bis 300 °C gerührt, bis die Säurezahl des Reaktionsgemisches einen Wert von < 2 mg KOH/g erreicht hat. Dann wird die Mischung auf 120 bis 160 °C abgekühlt und Monosäure wird zugegeben. Danach wird erneut Vakuum angelegt und die überschüssige Säure entfernt. Danach wird das Reaktionsprodukt noch bei 50 bis 150 °C filtriert.

Die zur Herstellung der Verbindungen der allgemeinen Formel (I) eingesetzten aliphatischen Dicarbonsäuren, Diole und einwertigen Carbonsäuren können entweder kommerziell erworben oder nach literaturbekannten Synthesewegen hergestellt werden.

Als Polyester-Weichmacher der allgemeinen Formel (I) können auch kommerziell erhältliche Polyester-Weichmacher eingesetzt werden. Geeignete kommerziell erhältliche Polyester-Weichmacher sind beispielsweise Polyesterweichmacher vom Typ Palamoll^{®} 646, die von BASF SE, Ludwigshafen, angeboten werden.

### Verbindungen der allgemeinen Formel (II)

Die Verbindungen der allgemeinen Formel (II) können entweder kommerziell erworben oder nach im Stand der Technik bekannten Verfahren, wie beispielsweise in der EP 1171413 B1 beschrieben, hergestellt werden.

In der Regel werden die 1,2-Cyclohexandicarbonsäureester meist durch Kernhydrierung der entsprechenden Phthalsäureester erhalten. Die Kernhydrierung kann nach dem in der WO 99/32427 beschriebenen Verfahren erfolgen. Ein besonders geeignetes Kernhydrierungsverfahren beschreibt beispielsweise auch die WO 2011082991 A2.

Des Weiteren können 1 ,2-Cyclohexandicarbonsäureester durch Veresterung von 1,2-Cyclohexandicarbonsäure oder geeigneten Derivaten davon mit den entsprechenden Alkoholen erhalten werden. Die Veresterung kann nach üblichen dem Fachmann bekannten Verfahren erfolgen.

Den Verfahren zur Herstellung der Verbindungen der allgemeinen Formel (II) ist gemein, dass ausgehend von Phthalsäure, 1,2-Cyclohexandicarbonsäure oder geeigneten Derivaten davon, eine Veresterung bzw. eine Umesterung durchgeführt wird, wobei die entsprechenden C₇-C₁₂-Alkanole als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit denen diese dargestellt werden.

Bevorzugte C₇-C₁₂-Alkanole, die zur Herstellung der in der erfindungsgemäßen Weichmacher-Zusammensetzung enthaltenen Verbindungen (I) und (II) eingesetzt werden, können geradkettig oder verzweigt sein oder aus Gemischen aus geradkettigen und verzweigten C₇-C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugt sind C₈-C₁₁-Alkanole, insbesondere 2-Ethylhexanol, Isononanol und 2-Propylheptanol, speziell Isononanol.

### Heptanol

Die zur Herstellung der Verbindungen der allgemeinen Formeln (I) und (II) eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol^{®}-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US- A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162 - 168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Hexanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungsverfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligand-modifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben. Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und DE-A 2445303 beschrieben. Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 °C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder -carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol^{®}-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den Nickelkomplex-Katalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80 °C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002).

Alternativ zum mit homogen im Reaktionsmedium gelösten Nickelkatalysatoren betriebenen Dimersol^{®}-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol^{®}-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas^{®}-Verfahren zur Olefindi- bzw. Oligomerisierung benutzt werden (Chitnis et al; Hydrocarbon Engineering 10, Nr. 6, Juni 2005). Zur Codimerisierung von Propen und Butenen zu Heptenen sehr gut geeignete Brønsted-acide Katalysatoren sind Zeolithe, deren sich das auf Basis des PolyGas^{®}-Verfahrens weiterentwickelte EMOGAS^{®}-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw. Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die Rhodium- oder vorzugsweise Kobalt-katalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Weichmacher-Zusammensetzung enthaltenen Diisononylester der allgemeinen Formeln (I) und (II) eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolithe oder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas^{®}- oder EMOGAS^{®}-Verfahren eingesetzt werden, mittels des Dimersol^{®}-Verfahrens unter Verwendung homogen im Reaktionsmedium gelöster Nickel-Komplex-Katalysatoren oder mittels heterogener, Nickel(II)oxid-haltiger Katalysatoren nach dem Octol^{®}-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Weichmacher-Zusammensetzung verwendeten Diisononylester der allgemeinen Formeln (I) und (II) sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Verbindungen der allgemeinen Formeln (I) und (II) verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können. Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen;
mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas^{®}- oder EMOGAS^{®}-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
mit der Maßgabe, dass sich die Gesamtsumme der genannten Komponenten
100 Gew.-% ergibt.

### Decanol

Bei Isodecanol, welches zur Synthese der in der erfindungsgemäßen Weichmacher-Zusammensetzung enthaltenen Diisodecylester der allgemeinen Formeln (I) und (II) eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas^{®}- oder dem EMOGAS^{®}-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Weichmacher-Zusammensetzung enthaltenen Di(2-propylheptyl)ester der allgemeinen Formel (II) eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Weichmacher-Zusammensetzung enthaltenen Verbindungen der allgemeinen Formel (II) mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formeln (I) und (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Weichmacher-Zusammensetzung enthaltenen Verbindungen der allgemeinen Formeln (I) und (II) eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (I) und (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇-bis C₁₁-Alkylalkohole bzw. deren Gemische, wie vorstehend beschrieben, zur Herstellung der erfindungsgemäß eingesetzten Diesterverbindungen der allgemeinen Formel (II) verwendet werden.

### Dodecanol

Im Wesentlichen geradkettiges Dodecanol kann in vorteilhafter Weise über das Alfol^{®}- oder Epal^{®}-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Diesterverbindungen der allgemeinen Formeln (I) oder (II) verwendet werden.

### Anwendungen Formmasse

Die erfindungsgemäße Formmasse wird bevorzugt für die Herstellung von Formkörpern, Profilen und Folien verwendet. Dazu gehören insbesondere Gehäuse von Elektrogeräten, wie beispielsweise Küchengeräten und Computergehäuse; Werkzeuge; Apparate; Rohrleitungen; Kabel; Schläuche, wie beispielsweise Kunststoffschläuche, Wasser- und Bewässerungsschläuche, Industrie-Gummischläuche oder Chemieschläuche; Draht-Ummantelungen; Fensterprofile; Kunststoffprofile für z.B. Förderbänder; Komponenten für den Fahrzeugbau, wie beispielsweise Karosseriebestandteile, Vibrationsdämpfer für Motoren; Reifen; Möbel, wie beispielsweise Stühle, Tische oder Regale; Schaumstoff für Polster und Matratzen; Planen, wie beispielsweise LKW-Planen, Zeltplanen oder Dachbahnen; Dichtungen; Verbundfolien, wie Folien für Verbundsicherheitsglas, insbesondere für Fahrzeug- und Fensterscheiben; Selbstklebefolien; Kaschierfolien; Zeltplanen; Dachbahnen; Schallplatten; Kunstleder; Verpackungsbehälter; Klebebandfolien oder Beschichtungen.

Daneben eignet sich die erfindungsgemäße Formmasse zusätzlich für die Herstellung von Formkörpern und Folien, die direkt mit Menschen oder Nahrungsmitteln in Kontakt kommen. Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung oder Fasern für Gewebe und dergleichen.

Bei den Medizinprodukten, die aus der erfindungsgemäßen Formmasse hergestellt werden können, handelt es sich beispielsweise um Schläuche für enterale Ernährung und Hämodialyse, Beatmungsschläuche, Infusionsschläuche, Infusionsbeutel, Blutbeutel, Katheter, Trachealtuben, Einmalspritzen, Handschuhe oder Atemmasken.

Bei den Lebensmittelverpackungen, die aus der erfindungsgemäßen Formmasse hergestellt werden können, handelt es sich beispielsweise um Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Bei den Produkten für den Innenraumbereich, die aus der erfindungsgemäßen Formmasse hergestellt werden können, handelt es sich beispielsweise um Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden oder um Verkleidungen oder Konsolenabdeckungen in Fahrzeugen.

Bei den Spielzeugen und Kinderpflegeartikeln, die aus der erfindungsgemäßen Formmasse hergestellt werden können, handelt es sich beispielsweise um Puppen, aufblasbares Spielzeug wie Bälle, Spielfiguren, Spielzeugtiere, anatomische Modelle für die Ausbildung, Knete, Schwimmhilfen, Kinderwagen-Abdeckhauben, Wickelauflagen, Wärmflaschen, Beißringe oder Fläschchen.

Bei den Sport und Freizeitprodukten, die aus der erfindungsgemäßen Formmasse hergestellt werden können, handelt es sich beispielsweise um Gymnastikbälle, Übungsmatten, Sitzkissen, Massagebälle und -rollen, Schuhe bzw. Schuhsolen, Bälle, Luftmatratzen oder Trinkflaschen.

Bei der Bekleidung, die aus den erfindungsgemäßen Formmassen hergestellt werden können, handelt es sich beispielsweise um (beschichtete) Textilien, wie Latex-Kleidung, Schutzbekleidung oder Regenkleidung, wie Regenjacken oder Gummistiefel.

### Nicht-PVC-Anwendungen

Daneben beinhaltet die vorliegende Erfindung die Verwendung der erfindungsgemäßen Weichmacher-Zusammensetzung als Hilfsmittel oder/und in Hilfsmitteln, ausgewählt unter: Kalandrierhilfsmitteln; Rheologiehilfsmitteln; oberflächenaktive Zusammensetzungen wie Fließ-, Filmbildehilfen, Entschäumern, Schaumverhütern, Benetzungsmitteln, Koaleszenzmitteln und Emulgatoren; Schmierstoffen, wie Schmierölen, Schmierfetten und Schmierpasten; Quenchern für chemische Reaktionen; Phlegmatisierungsmitteln; pharmazeutischen Produkten; Weichmachern in Klebstoffen oder Dichtstoffen; Schlagzähmodifizierern und Stellmitteln.

### FIGURENBESCHREIBUNG

### Figur 1:

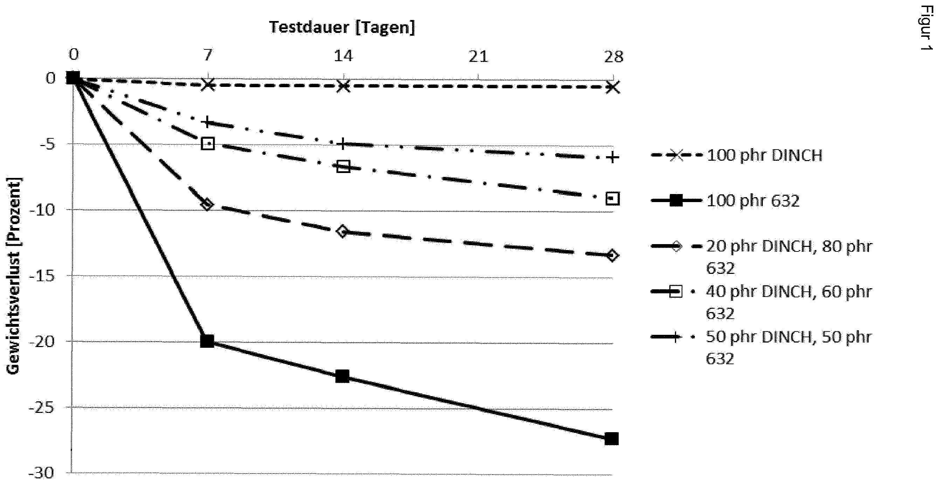

Figur 1 zeigt die Weichmacherverträglichkeit von Weich-PVC-Folien, enthaltend 100 phr einer Weichmacher-Zusammensetzung sowie als Vergleich Weich-PVC-Folien, enthaltend ausschließlich die kommerziell erhältlichen Weichmacher Hexamoll^{®} DINCH^{®} (DINCH) oder Palamoll^{®} 632 (632). Dargestellt ist der Verlust an Trockengewicht [Prozent] in Abhängigkeit der Testdauer (Lagerzeit) [Tage].

### BEISPIELE (nicht erfindungsgemäß)

In den Beispielen werden folgende Einsatzstoffe verwendet:

| Einsatzstoff | Hersteller |
|---|---|
| Suspensions-PVC, Markenname Solvin^{®} 271 SP | INOVYN ChlorVinyls Limited, London, UK |
| Polyester-Weichmacher basierend auf Adipinsäure, 1,2-Propandiol und Essigsäure, Markenname Palamoll^{®} 632 | BASF SE, Ludwigshafen, Deutschland |
| Diisononylcyclohexandicarboxylat, Markenname Hexamoll^{®} DINCH^{®} | BASF SE, Ludwigshafen, Deutschland |
| Ba-Zn Stabilisator, Markenname Reagens^{®} SLX/781 | Reagens S.p.A., Bologna, Italy |

### Bestimmung der Molmasse

Die zahlenmittlere und die gewichtsmittlere Molmasse wurde mittels Gel-Permeations-Chromatographie (GPC) gemessen. Die GPC wurde an einem Gerät GPC-System Infinity 1100 der Firma Agilent Technologies durchgeführt, bestehend aus Pumpe, Säulenheizung, Säulen und mit einem Detektor DRI Agilent 1200. Das Elutionsmittel ist THF, welches mit einer Durchflussgeschwindigkeit von 1 ml/min durch eine Säulenkombination von zwei auf 35 ° C temperierten Säulen PLgel Mixed-E der Firma Agilent fließt. Die in einer Konzentration von 2 mg/ml in THF aufgelösten Proben werden vor dem Injizieren über einen Macherey-Nagel PTFE-20/25 (0,2 mm) Filter filtriert. 100 ml wurden injiziert. Die Auswertung der erhaltenen Messwerte erfolgte über eine Kalibrationskurve, welche mit eng verteilten Polystyrol-Standards der Fa. Polymer Laboratories mit Molekulargewichten von M = 162 bis M = 50400 zuvor erhalten wurde.

### I. Herstellung und Prüfung von Weich-PVC-Folien hergestellt unter Einsatz von Weichmacher-Zusammensetzungen und unter Einsatz kommerziell verfügbarer Weichmacher:

### Rezeptur

| Additiv | phr |
|---|---|
| PVC (Homopolymeres Suspensions-PVC, Markenname Solvin^{®} 271 SP) | 100 |
| Weichmacher-Zusammensetzung | 100 |
| Ba-Zn Stabilisator, Markenname Reagens^{®} SLX/781 | 2 |

| Beispiel (nicht erfindungsgemäß) | Weichmacher Zusammensetzung | |
|---|---|---|
| | Palamoll^{®} 632 Gehalt / % | Hexamoll^{®} DINCH Gehalt / % |
| 1 | 80 | 20 |
| 2 | 60 | 40 |
| 3 | 50 | 50 |
| V1 | 100 | 0 |
| V2 | 0 | 100 |

### I.a Herstellung der Weich-PVC-Folien

150 g PVC (Homopolymeres Suspensions-PVC, Markenname Solvin^{®} 271 SP); 150 g Weichmacher-Zusammensetzung und 2 g Ba/Zn-Stabilisator, Markenname Reagens^{®} SLX/781 wurden mit einem Handmixer bei Raumtemperatur vermischt. Die Mischung wurde anschließend auf einem ölbeheizten Labormischwalzwerk (Fa. Collin, Automatikwalzwerk Typ 150, Durchmesser: 252 mm, Breite: 450 mm) plastifiziert und zu einem Walzfell verarbeitet. Die Temperatur der beiden Walzen betrug jeweils 180 °C; die Drehzahlen lagen bei 15 Umdrehungen/min. (vordere Walze) und 12 Umdrehungen/min. (hintere Walze); die Walzzeit betrug 5 Minuten.
Man erhielt so ein Walzfell mit einer Dicke von 0,53 mm. Das abgekühlte Walzfell wurde anschließend bei einer Temperatur von 190 °C und einem Druck von 150 bar innerhalb von 180 s auf einer Presse vom Typ "Laborplattenpresse 400 P" der Fa. Collin zu einer Weich-PVC-Folie mit einer Dicke von 0,50 mm verpresst.

### I.b Prüfung der Verträglichkeit der Weichmacher an den Weich-PVC-Folien

### Zweck der Untersuchung

Die Prüfung dient zur quantitativen Messung der Verträglichkeit von Weichmachern in Weich-PVC-Rezepturen. Sie wird bei erhöhter Temperatur (70 °C) und 100 % relative Luftfeuchtigkeit durchgeführt. Die erhaltenen Daten werden gegen die Lagerzeit ausgewertet.

### Probekörper

Zur Prüfung werden Prüfkörper (Folien) mit einer Größe von 75 x 110 x 0,5 mm verwendet. Die Folien werden an der Breitseite gelocht, beschriftet (Lötkolben) und gewogen.

### Prüfgeräte

Heraeus-Trockenschrank bei 70 °C, Analysenwaage, Temperaturmessgerät Testotherm mit Fühler für Innenraummessung im Trockenschrank.

### Durchführung

Es wird die Temperatur im Innenraum des Trockenschrankes auf die geforderten 70 °C eingestellt. Die fertigen gewogenen Folien werden auf ein Drahtgestell aufgehängt und in eine Glaswanne, die ca. 5 cm mit Wasser (VE-Wasser) gefüllt ist, hineingestellt. Zu beachten ist, dass die Folien sich gegenseitig nicht berühren. Die Unterkanten der Folien dürfen nicht ins Wasser hängen. Die Glaswanne wird mit einer Polyethylen-Folie wasserdampfdicht verschlossen, damit der später in der Glaswanne entstehende Wasserdampf nicht entweichen kann. Der Wasserstand in den Glasbecken wird täglich kontrolliert und evtl. fehlendes Wasser wird ersetzt.

### Lagerzeit

Nach 7, 14 und 28 Tagen werden jeweils 2 Folien der Glaswanne entnommen und für 1 Std. frei hängend an der Luft klimatisiert. Danach werden die Folien mit Methanol oberflächlich gereinigt. Anschließend werden die Folien für 16 h bei 70 °C in einem Trockenschrank mit Zwangskonvektion frei hängend getrocknet. Nach Entnahme aus dem Trockenschrank werden die Folien für 1 Std. frei hängend klimatisiert und anschließend gewogen. Angegeben wird jeweils der arithmetische Mittelwert der Gewichtsverluste der Folien.

### Ergebnisse

Figur 1 zeigt die Ergebnisse der Verträglichkeitsprüfungen von PVC-Folien, die unter Einsatz von Weichmacher-Zusammensetzungen (nicht erfindungsgemäße Beispiele 1 bis 3) sowie unter Verwendung der reinen Polymer- bzw. Monomer-Weichmacher (nicht erfindungsgemäße Beispiele V1 und V2) hergestellt wurden. Dargestellt ist der Verlust an Trockengewicht [Prozent] in Abhängigkeit der Testdauer (Lagerzeit) [Tage].

Wie in der Figur 1 sehr gut zu erkennen ist, hat der reine Polymerweichmacher Palamoll^{®} 632 eine sehr schlechte Verträglichkeit mit PVC. Der Gewichtsverlust im Verträglichkeitstest nach 28 Tagen liegt bei rund 27 %. Bereits der Zusatz von nur 20 phr Hexannall^{®} DINCH^{®} führt bei gleichem Gesamtweichmacher-Gehalt von 100 phr zu einer deutlichen Reduktion des Gewichtsverlustes an Weichmacher um etwa die Hälfte und damit zu einer deutlichen Verbesserung der Verträglichkeit. Durch weitere Erhöhung des Zusatzes an Hexamoll^{®} DINCH^{®} bei gleichem Gesamtweichmacher-Gehalt lässt sich der Gewichtsverlust weiter deutlich reduzieren.

## Patentansprüche

1. Weichmacher-Zusammensetzung, enthaltend
a) eine oder mehrere Verbindungen der allgemeinen Formel (I), 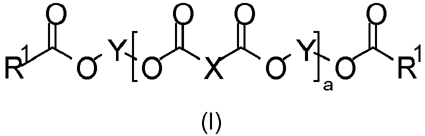 worin
X für eine unverzweigte oder verzweigte C₂-C₈-Alkylengruppe oder eine unverzweigte oder verzweigte C₂-C₈-Alkenylengruppe, enthaltend wenigstens eine Doppelbindung, steht, wobei in dem Fall, dass in der Verbindung der allgemeinen Formel (I) mehrere Gruppen X enthalten sind, diese die gleiche Bedeutung haben,
Y jeweils für eine unverzweigte oder verzweigte C₂-C₁₂-Alkylengruppe oder eine unverzweigte oder verzweigte C₂-C₁₂-Alkenylengruppe, enthaltend wenigstens eine Doppelbindung, steht, wobei in der Verbindung der allgemeinen Formel (I) die Gruppen Y nicht alle die gleiche Bedeutung haben,
a für eine ganze Zahl von 1 bis 100 steht und
R¹ unabhängig voneinander ausgewählt sind unter unverzweigten oder verzweigten C₁-C₁₂-Alkylresten,
und
b) eine oder mehrere Verbindungen der allgemeinen Formel (II), 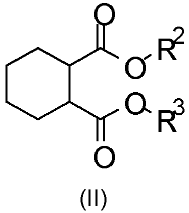 worin
R² und R³ unabhängig voneinander ausgewählt sind unter verzweigten und unverzweigten C₇-C₁₂-Alkylresten,
wobei der Gehalt an Verbindungen der allgemeinen Formel (I) in der Weichmacher-Zusammensetzung 10 bis 99 Gew.-% beträgt und der Gehalt an Verbindungen der allgemeinen Formel (II) in der Weichmacher-Zusammensetzung 1 bis 90 Gew.-% beträgt.

2. Weichmacher-Zusammensetzung nach Anspruch 1, wobei die gewichtsmittlere Molmasse der Verbindungen (I) im Bereich von 500 bis 15000 g/mol liegt.

3. Weichmacher-Zusammensetzung nach einem der vorangehenden Ansprüche, wobei in der Verbindung der allgemeinen Formel (I) X für eine verzweigte oder unverzweigte C₂-C₆-Alkylengruppe steht und Y jeweils für eine verzweigte oder unverzweigte C₂-C₅-Alkylengruppe steht.

4. Weichmacher-Zusammensetzung nach einem der vorangehenden Ansprüche, wobei in den Verbindungen der allgemeinen Formel (I) R¹ unabhängig voneinander für Methyl, Ethyl, n-Propyl, Isopropyl, n-Butyl, Isobutyl, n-Pentyl, 2-Pentyl, 2-Methylbutyl, 3-Methylbutyl, n-Hexyl, 1-Methylpentyl, 2-Methylpentyl, 1-Ethylbutyl, 2-Ethylbutyl, n-Heptyl, 1-Methylhexyl, 2-Methylhexyl 1-Ethylpentyl, 2-Ethylpentyl, 1-Propylbutyl, n-Octyl, Isooctyl oder 2-Ethylhexyl steht.

5. Weichmacher-Zusammensetzung nach einem der vorangehenden Ansprüche, wobei in den Verbindungen der allgemeinen Formel (I) R¹ beide für Methyl, beide für Ethyl, beide für n-Propyl, beide für Isopropyl, beide für n-Butyl, beide für Isobutyl oder beide für n-Pentyl stehen.

6. Weichmacher-Zusammensetzung nach einem der vorangehenden Ansprüche, wo-bei in den Verbindungen der allgemeinen Formel (II) R² und R³ beide für 2-Ethylhexyl, beide für Isononyl oder beide für 2-Propylheptyl stehen.

7. Weichmacher-Zusammensetzung nach einem der vorangehenden Ansprüche, wobei die Weichmacher-Zusammensetzung gegebenenfalls einen weiteren von den Verbindungen (I) und (II) verschiedenen Weichmacher enthält, der ausgewählt ist unter Phthalsäurealkylaralkylestern, Trimellitsäuretrialkylestern, Benzoesäurealkylestern, Dibenzoesäureestern von Glycolen, Hydroxybenzoesäureestern, Monoestern von gesättigten Monocarbonsäuren, Monoestern von Hydroxymonocarbonsäuren, Estern von ungesättigten Monocarbonsäuren, Estern von gesättigten Hydroxydicarbonsäuren, Amiden und Estern von aromatischen Sulfonsäuren, Alkylsulfonsäureestern, Glycerinestern, Isosorbidestern, Phosphorsäureestern, Citronensäurediestern, Citronensäuretriestern, Alkylpyrrolidonderivaten, 2,5-Furandicarbonsäureestern, 2,5-Tetrahydrofurandicarbonsäureestern, epoxidierten Pflanzenölen, epoxidierten Fettsäuremonoalkylestern, 1,3-Cyclohexandicarbonsäuredialkylester, 1,4-Cyclohexandicarbonsäuredialkylester, von Verbindungen (I) verschiedenen Polyestern aus aliphatischen und/oder aromatischen Polycarbonsäuren mit wenigstens zweiwertigen Alkoholen.

8. Weichmacher-Zusammensetzung nach einem der vorangehenden Ansprüche, wo-bei das Gewichtsverhältnis zwischen Verbindungen der allgemeinen Formel (II) und Verbindungen der allgemeinen Formel (I) im Bereich von 1 : 100 bis 10: 1 liegt.

9. Formmasse, enthaltend wenigstens ein Polymer und eine Weichmacher-Zusammensetzung wie in einem der Ansprüche 1 bis 8 definiert.

10. Formmasse nach Anspruch 9, wobei es sich bei dem Polymer um ein thermoplastisches Polymer handelt, das ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, Acrylnitril, Methacrylnitril, Maleinsäureanhydrid und α,β-ethylenisch ungesättigten Mono- und Dicarbonsäuren,
- Homo- und Copolymeren von Vinylacetaten,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

11. Formmasse nach Anspruch 10, wobei das thermoplastische Polymer ausgewählt ist unter Polyvinylchlorid (PVC), Polyvinylbutyral (PVB), Homo- und Copolymeren von Vinylacetat, Homo- und Copolymeren von Styrol, Polyacrylate, thermoplastischen Polyurethanen (TPU) oder Polysulfiden.

12. Formmasse nach einem der Ansprüche 10 oder 11, wobei es sich bei dem thermoplastischen Polymer um Polyvinylchlorid (PVC) handelt.

13. Formmasse nach Anspruch 12, wobei der Gehalt der Weichmacher-Zusammensetzung in der Formmasse 5,0 bis 300 phr beträgt.

14. Formmasse nach einem der Ansprüche 9 bis 11, enthaltend wenigstens ein von Polyvinylchlorid verschiedenes thermoplastisches Polymer, wobei der Gehalt der Weichmacher-Zusammensetzung in der Formmasse 0,5 bis 300 phr beträgt.

15. Formmasse nach Anspruch 9, wobei es sich bei dem Polymer um ein Elastomer handelt, bevorzugt ausgewählt unter natürlichen Kautschuken, synthetischen Kautschuken und Mischungen davon.

16. Formmasse nach Anspruch 15, wobei der Gehalt der Weichmacher-Zusammensetzung in der Formmasse 1,0 bis 60 phr beträgt.

17. Verwendung einer Weichmacher-Zusammensetzung, wie in einem der Ansprüche 1 bis 8 definiert, als Weichmacher für thermoplastische Polymere und Elastomere.

18. Verwendung einer Formmasse, wie in einem der Ansprüche 9 bis 16 definiert, zur Herstellung von Formkörpern und Folien, wie beispielsweise Gehäusen von Elektrogeräten, Computergehäusen, Werkzeugen, Rohrleitungen, Kabeln, Schläuchen, Draht-Ummantelungen, Fensterprofilen, Kunststoffprofile für z.B. Förderbänder, Komponenten für den Fahrzeugbau, Reifen, Möbeln, Schaumstoff für Polster und Matratzen, Planen, Dichtungen, Verbundfolien, Selbstklebefolien, Kaschierfolien, Zeltplanen, Dachbahnen, Schallplatten, Kunstleder, Verpackungsbehältern, Klebebandfolien oder Beschichtungen.

19. Verwendung einer Formmasse, wie in einem der Ansprüche 9 bis 16 definiert, zur Herstellung von Formkörpern und Folien, die direkt mit Menschen oder Nahrungsmitteln in Kontakt kommen.

20. Verwendung wie in Anspruch 19 definiert, wobei es sich bei den Formkörpern und Folien, die direkt mit Menschen oder Nahrungsmitteln in Kontakt kommen, um Medizinprodukte, Hygieneprodukte, Lebensmittelverpackungen, Produkte für den Innenraumbereich, Spielzeuge und Kinderpflegeartikel, Sport- und Freizeitprodukte, Bekleidung oder Fasern für Gewebe handelt.

## Claims

1. A plasticizer composition comprising
a) one or more compounds of the general formula (I), 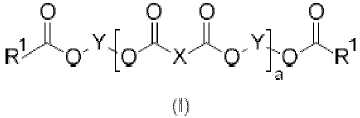 in which
X is an unbranched or branched C₂-C₈-alkylene group or an unbranched or branched C₂-C₈-alkenylene group, comprising at least one double bond, where, if in the compound of the general formula (I) a plurality of groups X are present, these have the same meaning,
Y is in each case an unbranched or branched C₂-C₁₂-alkylene group or an unbranched or branched C₂-C₁₂-alkenylene group, comprising at least one double bond, where, in the compound of the general formula (I), the groups Y do not all have the same meaning,
a is an integer from 1 to 100 and
R¹ independently of one another are selected from unbranched or branched C₁-C₁₂-alkyl radicals,
and
b) one or more compounds of the general formula (II), 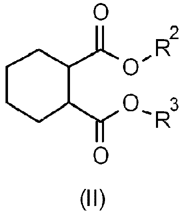 in which
R² and R³, independently of one another, are selected from branched and unbranched C₇-C₁₂-alkyl radicals,
where the content of compounds of the general formula (I) in the plasticizer composition is 10 to 99% by weight and the content of compounds of the general formula (II) in the plasticizer composition is 1 to 90% by weight.

2. The plasticizer composition according to claim 1, where the weight-average molar mass of the compounds (I) is in the range from 500 to 15 000 g/mol.

3. The plasticizer composition according to either of the preceding claims, where, in the compound of the general formula (I), X is a branched or unbranched C₂-C₆-alkylene group and Y is in each case a branched or unbranched C₂-C₅-alkylene group.

4. The plasticizer composition as claimed in any one of the preceding claims, where, in the compounds of the general formula (I), R¹ is, independently of the others, methyl, ethyl, n-propyl, isopropyl, n-butyl, isobutyl, n-pentyl, 2-pentyl, 2-methylbutyl, 3-methylbutyl, n-hexyl, 1-methylpentyl, 2-methylpentyl, 1-ethylbutyl, 2-ethylbutyl, n-heptyl, 1-methylhexyl, 2-methylhexyl, 1-ethylpentyl, 2-ethylpentyl, 1-propylbutyl, n-octyl, isooctyl or 2-ethylhexyl.

5. The plasticizer composition according to any one of the preceding claims, where, in the compounds of the general formula (I), R¹ are both methyl, both ethyl, both n-propyl, both isopropyl, both n-butyl, both isobutyl or both n-pentyl.

6. The plasticizer composition according to any one of the preceding claims, where, in the compounds of the general formula (II), R² and R³ are both 2-ethylhexyl, both isononyl or both 2-propylheptyl.

7. The plasticizer composition according to any one of the preceding claims, where the plasticizer composition optionally comprises a further plasticizer different from the compounds (I) and (II) which is selected from phthalic acid alkyl aralkyl esters, trimellitic acid trialkyl esters, benzoic acid alkyl esters, dibenzoic acid esters of glycols, hydroxybenzoic acid esters, monoesters of saturated monocarboxylic acids, monoesters of hydroxymonocarboxylic acids, esters of unsaturated monocarboxylic acids, esters of saturated hydroxydicarboxylic acids, amides and esters of aromatic sulfonic acids, alkylsulfonic acid esters, glycerol esters, isosorbide esters, phosphoric acid esters, citric acid diesters, citric acid triesters, alkylpyrrolidone derivatives, 2,5-furandicarboxylic acid esters, 2,5-tetrahydrofurandicarboxylic acid esters, epoxidized vegetable oils, epoxidized fatty acid monoalkyl esters, 1,3-cyclohexanedicarboxylic acid dialkyl esters, 1,4-cyclohexanedicarboxylic acid dialkyl esters, polyesters of aliphatic and/or aromatic polycarboxylic acids with at least dihydric alcohols different from compounds (I).

8. The plasticizer composition according to any one of the preceding claims, where the weight ratio between compounds of the general formula (II) and compounds of the general formula (I) is in the range from 1:100 to 10:1.

9. A molding material comprising at least one polymer and a plasticizer composition as defined in any one of claims 1 to 8.

10. The molding material according to claim 9, where the polymer is a thermoplastic polymer which is selected from
- homopolymers or copolymers which comprise at least one monomer in polymerized-in form which is selected from C₂-C₁₀-monoolefins, 1,3-butadiene, 2-chloro-1,3-butadiene, vinyl alcohol and C₂-C₁₀-alkyl esters thereof, vinyl chloride, vinylidene chloride, vinylidene fluoride, tetrafluoroethylene, glycidyl acrylate, glycidyl methacrylate, acrylates and methacrylates of C₁-C₁₀-alcohols, vinyl aromatics, acrylonitrile, methacrylonitrile, maleic anhydride and α,β-ethylenically unsaturated mono- and dicarboxylic acids,
- homopolymers and copolymers of vinyl acetates,
- polyvinyl esters,
- polycarbonates,
- polyesters,
- polyethers,
- polyether ketones,
- thermoplastic polyurethanes,
- polysulfides,
- polysulfones,
- polyethersulfones,
- cellulose alkyl esters,
and mixtures thereof.

11. The molding material according to claim 10, where the thermoplastic polymer is selected from polyvinyl chloride (PVC), polyvinylbutyral (PVB), homopolymers and copolymers of vinyl acetate, homopolymers and copolymers of styrene, polyacrylates, thermoplastic polyurethanes (TPU) or polysulfides.

12. The molding material according to either of claims 10 and 11, where the thermoplastic polymer is polyvinyl chloride (PVC).

13. The molding material according to claim 12, where the content of the plasticizer composition in the molding material is 5.0 to 300 phr.

14. The molding material according to any one of claims 9 to 11, comprising at least one thermoplastic polymer different from polyvinyl chloride, where the content of the plasticizer composition in the molding material is 0.5 to 300 phr.

15. The molding material according to claim 9, where the polymer is an elastomer, preferably selected from natural rubbers, synthetic rubbers and mixtures thereof.

16. The molding material according to claim 15, where the content of the plasticizer composition in the molding material is 1.0 to 60 phr.

17. The use of a plasticizer composition as defined in any one of claims 1 to 8 as plasticizer for thermoplastic polymers and elastomers.

18. The use of a molding material as defined in any one of claims 9 to 16 for producing moldings and films, such as, for example, housings of electrical devices, computer housings, tools, pipelines, cables, hoses, wire sheathings, window profiles, plastic profiles for e.g. conveyor belts, components for automobile construction, tires, furniture, foam for upholstery and mattresses, covers, sealants, composite films, self-adhesive films, laminating films, tarpaulins, roofing sheets, records, synthetic leather, packaging containers, adhesive tape films or coatings.

19. The use of a molding material as defined in any one of claims 9 to 16 for producing moldings and films which come into direct contact with people or foods.

20. The use as defined in claim 19, where the moldings and films which come into direct contact with people or foods are medicinal products, hygiene products, food packagings, products for interiors, toys and childcare articles, sport and leisure products, clothing or fibers for fabric.

## Revendications

1. Composition de plastifiant, contenant :
a) un ou plusieurs composés de formule générale (I) 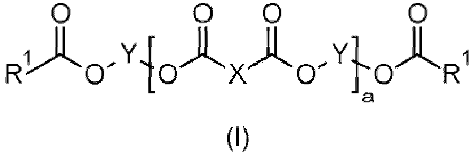 dans laquelle
X représente un groupe alkylène en C₂-C₈ non ramifié ou ramifié, ou un groupe alcénylène en C₂-C₈ non ramifié ou ramifié, contenant au moins une double liaison, dans laquelle dans le cas où plusieurs groupes X sont contenus dans le composé de formule générale (I), ceux-ci ont la même signification,
Y représente à chaque fois un groupe alkylène en C₂-C₁₂ non ramifié ou ramifié, ou un groupe alcénylène en C₂-C₁₂ non ramifié ou ramifié, contenant au moins une double liaison, dans laquelle dans le composé de formule générale (I), les groupes Y n'ont pas tous la même signification,
a représente un nombre entier de 1 à 100, et
les R¹ sont choisis indépendamment les uns des autres parmi les radicaux alkyle en C₁-C₁₂ non ramifiés ou ramifiés,
et
b) un ou plusieurs composés de formule générale (II) 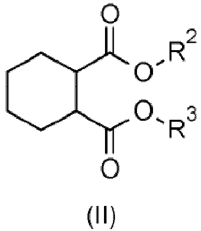 dans laquelle
R² et R³ sont choisis indépendamment l'un de l'autre parmi les radicaux alkyle en C₇-C₁₂ ramifiés et non ramifiés,
dans laquelle la teneur en composés de formule générale (I) dans la composition de plastifiant est de 10 à 99 % en poids et la teneur en composés de formule générale (II) dans la composition de plastifiant est de 1 à 90 % en poids.

2. Composition de plastifiant selon la revendication 1, dans laquelle la masse molaire moyenne en poids des composés (I) se situe dans la plage allant de 500 à 15 000 g/mol.

3. Composition de plastifiant selon l'une quelconque des revendications précédentes, dans laquelle, dans le composé de formule générale (I), X représente un groupe alkylène en C₂-C₆ ramifié ou non ramifié, et Y représente à chaque fois un groupe alkylène en C₂-C₅ ramifié ou non ramifié.

4. Composition de plastifiant selon l'une quelconque des revendications précédentes, dans laquelle, dans les composés de formule générale (I), les R¹ représentent indépendamment les uns des autres méthyle, éthyle, n-propyle, isopropyle, n-butyle, isobutyle, n-pentyle, 2-pentyle, 2-méthylbutyle, 3-méthylbutyle, n-hexyle, 1-méthylpentyle, 2-méthylpentyle, 1-éthylbutyle, 2-éthylbutyle, n-heptyle, 1-méthylhexyle, 2-méthylhexyle, 1-éthylpentyle, 2-éthylpentyle, 1-propylbutyle, n-octyle, isooctyle ou 2-éthylhexyle.

5. Composition de plastifiant selon l'une quelconque des revendications précédentes, dans laquelle, dans les composés de formule générale (I), les R¹ représentent tous les deux méthyle, tous les deux éthyle, tous les deux propyle, tous les deux isopropyle, tous les deux n-butyle, tous les deux isobutyle ou tous les deux n-pentyle.

6. Composition de plastifiant selon l'une quelconque des revendications précédentes, dans laquelle, dans les composés de formule générale (II), R² et R³ représentent tous les deux 2-éthylhexyle, tous les deux isononyle ou tous les deux 2-propylheptyle.

7. Composition de plastifiant selon l'une quelconque des revendications précédentes, dans laquelle la composition de plastifiant contient éventuellement un autre plastifiant différent des composés (I) et (II), qui est choisi parmi les esters alkylaralkyliques de l'acide phtalique, les esters trialkyliques de l'acide trimellitique, les esters alkyliques de l'acide benzoïque, les esters de l'acide dibenzoïque de glycols, les esters de l'acide hydroxybenzoïque, les monoesters d'acides monocarboxyliques saturés, les monoesters d'acides hydroxymonocarboxyliques, les esters d'acides monocarboxyliques insaturés, les esters d'acides hydroxydicarboxyliques saturés, les amides et les esters d'acides sulfoniques aromatiques, les esters d'acides alkylsulfoniques, les esters de glycérine, les esters d'isosorbide, les esters de l'acide phosphorique, les diesters de l'acide citrique, les triesters de l'acide citrique, les dérivés d'alkylpyrrolidone, les esters de l'acide 2,5-furanedicarboxylique, les esters de l'acide 2,5-tétrahydrofuranedicarboxylique, les huiles végétales époxydées, les esters monoalkyliques d'acides gras époxydés, les esters dialkyliques de l'acide 1,3-cyclohexanedicarboxylique, les esters dialkyliques de l'acide 1,4-cyclohexanedicarboxylique, les polyesters d'acides polycarboxyliques aliphatiques et/ou aromatiques différents des composés (I) et avec des alcools au moins bivalents.

8. Composition de plastifiant selon l'une quelconque des revendications précédentes, dans laquelle le rapport en poids entre les composés de formule générale (II) et les composés de formule générale (I) se situe dans la plage allant de 1:100 à 10:1.

9. Matériau de moulage, contenant au moins un polymère et une composition de plastifiant telle que définie dans l'une quelconque des revendications 1 à 8.

10. Matériau de moulage selon la revendication 9, dans lequel le polymère consiste en un polymère thermoplastique, qui est choisi parmi :
- les homo- ou copolymères qui contiennent au moins un monomère sous forme copolymérisée, qui est choisi parmi les monooléfines en C₂-C₁₀, le 1,3-butadiène, le 2-chloro-1,3-butadiène, l'alcool vinylique et ses esters alkyliques en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et méthacrylates d'alcools en C₁-C₁₀, les composés aromatiques de vinyle, l'acrylonitrile, le méthacrylonitrile, l'anhydride de l'acide maléique et les acides mono- et dicarboxyliques α,β-éthyléniquement insaturés,
- les homo- et copolymères d'acétates de vinyle,
- les polyesters de vinyle,
- les polycarbonates,
- les polyesters,
- les polyéthers,
- les polyéther-cétones,
- les polyuréthanes thermoplastiques,
- les polysulfures,
- les polysulfones,
- les polyéther-sulfones,
- les esters alkyliques de cellulose,
et leurs mélanges.

11. Matériau de moulage selon la revendication 10, dans lequel le polymère thermoplastique est choisi parmi le polychlorure de vinyle (PVC), le polyvinylbutyral (PVB), les homo- et copolymères d'acétate de vinyle, les homo- et copolymères de styrène, les polyacrylates, les polyuréthanes thermoplastiques (TPU) ou les polysulfures.

12. Matériau de moulage selon l'une quelconque des revendications 10 ou 11, dans lequel le polymère thermoplastique consiste en le polychlorure de vinyle (PVC).

13. Matériau de moulage selon la revendication 12, dans lequel la teneur de la composition de plastifiant dans le matériau de moulage est de 5,0 à 300 pce.

14. Matériau de moulage selon l'une quelconque des revendications 9 à 11, contenant au moins un polymère thermoplastique différent du polychlorure de vinyle, la teneur de la composition de plastifiant dans le matériau de moulage étant de 0,5 à 300 pce.

15. Matériau de moulage selon la revendication 9, dans lequel le polymère consiste en un élastomère, de préférence choisi parmi les caoutchoucs naturels, les caoutchoucs synthétiques et leurs mélanges.

16. Matériau de moulage selon la revendication 15, dans lequel la teneur de la composition de plastifiant dans le matériau de moulage est de 1,0 à 60 pce.

17. Utilisation d'une composition de plastifiant, telle que définie dans l'une quelconque des revendications 1 à 8, en tant que plastifiant pour des polymères thermoplastiques et des élastomères.

18. Utilisation d'un matériau de moulage, tel que défini dans l'une quelconque des revendications 9 à 16, pour la fabrication de corps moulés et de films, notamment de boîtiers d'appareils électriques, de boîtiers d'ordinateurs, d'outils, de canalisations, de câbles, de tuyaux, d'enrobages de fils, de profilés de fenêtres, de profilés en matière plastique p. ex. pour bandes de transport, de composants pour la construction de véhicules, de pneus, de meubles, de mousse pour rembourrages et matelas, de bâches, de joints d'étanchéité, de films composites, de films auto-adhésifs, de films de contre-collage, de bâches de tentes, de bandes de toiture, de disques, de cuir artificiel, de contenants d'emballage, de films de bande adhésive ou de revêtements.

19. Utilisation d'un matériau de moulage, tel que défini dans l'une quelconque des revendications 9 à 16, pour la fabrication de corps moulés et de films qui rentrent directement en contact avec des hommes ou des produits alimentaires.

20. Utilisation telle que définie dans la revendication 19, dans laquelle les corps moulés et les films qui rentrent directement en contact avec des hommes ou des produits alimentaires sont des produits médicaux, des produits d'hygiène, des emballages de produits alimentaires, des produits pour l'espace intérieur, des jouets et des articles de puériculture, des produits de sports et de loisirs, des vêtements ou des fibres pour tissus.
